# EUROPÄISCHE PATENTSCHRIFT

(11) **EP 0 713 738 B1**
(45) Veröffentlichungstag und Bekanntmachung des Hinweises auf die Patenterteilung: **21.02.2001**
(21) Anmeldenummer: 95117973.8
(22) Anmeldetag: 15.11.1995
(51) Int. Cl.: B22F 3/10, C22C 32/00, C22C 1/04

(54) **Gesintertes Formteil aus hochschmelzendem Metallpulver mit Dotierungen**
Sintered article from high melting metal powder with dopants
Corps fritté à partir de poudre métallique à point de fusion élevé avec dopants

(30) Priorität: 27.11.1994 DE 4442161
(43) Veröffentlichungstag der Anmeldung: 29.05.1996
(73) Patentinhaber: Bayerische Metallwerke GmbH, 85221 Dachau (DE)
(72) Erfinder: Prause, Oliver, D-80801 München (DE)
(74) Vertreter: Vogeser, Werner, Dipl.-Ing.

(56) Entgegenhaltungen:
- EP-A- 0 223 286
- EP-A- 0 573 195
- DE-C- 3 637 930

## Beschreibung

Die Erfindung betrifft ein Verfahren zur Herstellung eines Formteils gemäß der im Oberbegriff des Anspruches 1 angegebenen Art (Metals Handbook 9^{th} Edition; S. 441-443).

Die nach dem bekannten Verfahren hergestellten Elektroden, vor allem Wolframelektroden, werden dabei insbesondere für das Schutzgasschweißen, Plasmaschweißen, -schmelzschneiden und -spritzen sowie für Entladungslampen verwendet und im wesentlichen in den nacheinander folgenden Verfahrensschritten Pulverherstellung, Mischen, Pressen, Sintern und Formen der Endkontur der Elektrode durch mechanische Bearbeitung, wie Hämmern, Schleifen und/oder Zerspanung, hergestellt.

Bei der Herstellung der Elektroden wird angestrebt, daß diese eine hohe Dichte, eine homogene Verteilung der Dotierung im Wolfram-Matrixwerkstoff des Metallpulvers und ein definiertes Gefüge, d.h. eine vorbestimmte Kornausbildung, aufweisen.

In bekannter Weise wird zur Herstellung einer Elektrode ein Wolfram-Metallpulver mit einer Reinheit von ungefähr 99,95% und entsprechenden Dotierungen mit niedriger Elektronenaustrittsarbeit, z.B. ThO₂, Y₂O₃, CeO₂, ZrO₂ und/oder La₂O₃ verwendet.

Diese Dotierungen verringern die Elektrodenaustrittsarbeit gegenüber reinem Wolfram, d.h. im Betrieb wird die Emissionsstromdichte der Elektrode bei gleicher Temperatur erhöht.

Durch intensives Vermischen - Aufbereiten - des Wolframpulvers mit den Dotierungen ergibt sich eine feindispersive und homogene Verteilung der Dotierung im Endprodukt.

Das aufbereitete Metallpulver mit den Dotierungen wird anschließend zu einem Zwischenprodukt, z.B. zylindrischen Stäben, gepreßt, wobei eine gleichmäßige Dichteverteilung in dem Zwischenprodukt angestrebt wird.

Die Überführung des Zwischenprodukts in den metallischen Zustand erfolgt beim Sintern durch Anlegen eines elektrischen Stromes - Coolidge-Verfahren -. Durch den elektrischen Widerstand des gepreßten Werkstoffes wird eine Temperatur von ca. 2600° bis 3000° erreicht, die ca. 15 bis 30 Min. gehalten wird. Auf diese Weise verdichtet sich das Metallpulver mit der Dotierung auf ca. 80 bis 95 % der theoretischen Dichte. Um eine Oxidation des Wolframwerkstoffes an der Oberfläche zu verhindern, erfolgt dieser Prozeß in einer trockenen Wasserstoffatmosphäre.

In Abhängigkeit vom Verformungsgrad wird bei einer Temperatur von 900° bis 1600° C das nunmehr gesinterte Zwischenprodukt mechanisch in die Endkontur umgeformt, beispielsweise durch Hämmern. Anschließend werden durch Schleifen die Endmaße erreicht, wobei zugleich Oberflächenverunreinigungen und gegebenenfalls Risse beseitigt werden.

Die bekannten Elektroden haben jedoch den Nachteil, daß die Herstellung aufgrund der vielen Verfahrensschritte sehr aufwendig und durch den hohen Energiebedarf sehr kostenintensiv ist. Zudem sind die Möglichkeiten der Formgebung der Formteile sehr stark eingeschränkt. Weiterhin verdampfen die Dotierungen während des Herstellungsverfahrens. Dadurch kommt es in der Elektrode zu einer inhomogenen Verteilung der Dotierungen und somit zu ungleichmäßigen Eigenschaften der Elektrode während des Betriebs.

Der Erfindung liegt die Aufgabe zugrunde, ein Verfahren zur Herstellung einer Elektrode gemäß der im Oberbegriff des Anspruches 1 angegebenen Art dahingehend zu verbessern, daß unter Vermeidung der genannten Nachteile eine wesentlich einfachere und wirtschaftlichere Herstellung und exaktere Festlegung der Eigenschaften der Elektrode ermöglicht wird. Insbesondere sollen auch die Möglichkeiten der Formgebung der Elektrode erweitert werden.

Diese Aufgabe wird durch die kennzeichnenden Merkmale des Anspruches 1 in Verbindung mit seinen Oberbegriffsmerkmalen gelöst.

Mit dem erfindungsgemäßen Verfahren zur Herstellung einer Elektrode ist es nunmehr möglich, komplexe Geometrien in unterschiedlichen Dimensionen zu fertigen, da im wesentlichen die Endkontur der Elektrode bereits vor dem Sintern durch ein Formgebungsverfahren bestimmt wird, also zu einem Zeitpunkt, bei dem das verdichtete Metallpulver mit den Dotierungen/Zusätzen ca. 50 bis 70 % der theoretischen Dichte aufweist und noch nicht in den metallischen Zustand überführt ist. Die Gestaltung der Elektrode ist nun nicht mehr durch die eingeschränkte Formgebung und Bearbeitbarkeit der bekannten gesinterten Zwischenprodukte bei der Herstellung begrenzt.

Um die Sintertemperatur bzw. die Sinterzeit zu verringern, wird dem Metallpulver ein kristalliner sinteraktivierender Zusatz zugegeben.

Die Elektrode, insbesondere Kathode, enthält zumindest eine Dotierung aus einem Werkstoff mit niedriger Elektronenaustrittsarbeit. Beispielsweise ist es jetzt ohne weiteres möglich, eine Hohlkathode oder eine Selenelektrode mit den erfindungsgemäßen Merkmalen herzustellen.

Das Verfahren zur Herstellung einee Elektrode nach der Erfindung hat den weiteren Vorteil, daß sich die Rekristallisationsneigung des hochschmelzenden Matrixwerkstoffes des Metallpulvers der Elektrode verringert. Das insbesondere bei der Elektrodenherstellung nach dem Sintern bisher erforderliche Umformen und die damit verursachte Vorverformung der Elektrode, beispielsweise durch Hämmern, entfällt nunmehr vollständig. Eine starke Rekristallisation des Matrixwerkstoffes des Metallpulvers in der Elektrodenspitze, die durch die hohe Betriebstemperatur während der Anwendung hervorgerufen wird, verringert den diffusionsgesteuerten Materialtransport der elektronenemissionsfördernden Dotierung an die Oberfläche der Elektrodenspitze.

Zweckmäßigerweise wird in das Metallpulver vor dem Pressen die Dotierung mit niedriger Elektronenaustrittsarbeit mit bis zu 5 Gew-% eingebracht. Bei der Dotierung handelt es sich allgemein um ein oder mehrere Elemente oder Elementverbindungen mit energetisch instabiler Elektronenkonfiguration, d.h. mit unvollständig besetzten d- bzw. f- Elektronenschalen, mit Elektronendonatorenwirkung. Diese Elemente bzw. Elementverbindungen bilden vor allem Oxide und/oder Boride der Elemente der IIIb. bis IVb. Nebengruppe des-Periodensystems der Elemente sowie den ersten drei Elementen aus der Lanthanoiden- und Actinoidengruppe. Vorzugsweise sind dies im einzelnen Y₂O₃, ZrO₂, La₂O₃, CeO₂ und/oder LaB₆.

Als zweckmäßig hat es sich erwiesen, daß vor dem Pressen der sinteraktivierende Zusatz bis zu 1,0 Gew.-% im Metallpulver enthalten ist.

Den sinteraktivierenden Zusatz bilden dabei die Elemente der VIII. Nebengruppe des Periodensystems der Elemente. Vorzugsweise werden Nickel, Palladium und/oder Platin verwendet.

Aufgrund der sinteraktivierenden Zusätze wird bereits bei niedrigen Sintertemperaturen eine hohe Verdichtung erreicht, so daß ein Sintern im Ofen möglich ist.

Durch Anpassen der Sinterparameter, z.B. des Temperatur-Zeit-Verlaufes, werden eine hohe Dichte, ein geringer Verzug und geringe Verdampfungsverluste der Dotierungen und Zusätze gewährleistet. Die abzustimmenden Sinterparameter ergeben sich dabei u.a. in Abhängigkeit von der Art des Metallpulvers, von der Korngröße und der Kornverteilung, dem Aufbereitungsverfahren für das dotierte Metallpulver, dem Gehalt an Zusätzen und Dotierungen sowie der Gründichte.

Zur Sinterung des Metallpulvers wird das in Abhängigkeit der genannten Merkmale ermittelte Temperatur-Zeit-Profil durchfahren. Zur Vermeidung einer Oxidation des Matrixwerkstoffes während des Sinterns erfolgt der Sinterprozeß in einer trockenen Wasserstoff und/oder Argonatmosphäre.

Vorteilhaft wirkt sich die niedrige Sintertemperatur auf die erheblich reduzierte Verdampfungsmenge der Dotierung mit niedriger Elektronenaustrittsarbeit aus. Weiterhin können nunmehr temperaturempfindliche Dotierungen für das Formteil verwendet werden. Das Sintern erfolgt nun vorzugsweise in einem konventionellen Ofen. Im Gegensatz zum Coolidge-Verfahren können dadurch komplexe Formteilgeometrien gesintert werden. Weiterhin wirkt sich die homogene Erwärmung positiv auf die Schrumpfung des Formteils aus, z.B. durch einen geringeren Verzug des Formteils.

Gegenüber der herkömmlichen, bekannten Formteilfertigung - Pressen, Sintern im direkten Stromdurchgang, Hämmern und Zwischenglühen - ergibt sich daher für das neue Herstellungsverfahren - Pressen, Sintern im Ofen - eine erheblich verbesserte Wirtschaftlichkeit.

Weiterhin werden bei der durch das erfindungsgemäße Verfahren hergestellten Elektrode durch den sinteraktivierenden Zusatz und die herstellungsspezifische Restporosität die Eigenschaften, wie z.B. die Zündeigenschaften, die Standzeit, die Lichtbogenstabilität o.ä. nicht eingeschränkt.

Als Matrixwerkstoff des Metallpulvers für die Elektrode wird insbesondere Wolfram und/oder Molybdän verwendet.

Das Metallpulver wird entweder naßchemisch - hydrometallurgisch oder trocken-mechanisch aufbereitet. Bei diesen Aufbereitungsverfahren wird angestrebt, daß eine möglichst homogene und feindisperse Verteilung des sinteraktivierenden Zusatzes auf den Partikeln des Matrixwerkstoffes des Metallpulvers erreicht wird. Zur wirkungsvollen Aktivierung des Sintervorgangs ist beispielsweise eine dünne Nickelschicht auf der Wolframkornoberfläche erforderlich, wobei sich aufgrund der hohen Löslichkeit und Diffusibilität von Wolfram in Nickel eine oberflächennahe, vermutlich steigerungsbehaftetete Wolfram-Nickelschicht ausbildet.

Bei dem naßchemischen - hydrometallurgischen Aufbereitungsverfahren werden während des Aufbereitungsverfahrens von Wolframerzen beispielsweise zwei Zwischenprodukte hergestellt - Ammoniumparawolframat (WO(NH₄)₂) oder Wolframtrioxid (WO₃). Diesen Zwischenprodukten wird ein wasserlösliches Salz des kristallinen sinteraktivierenden Zusatzes, z.B. Nickelnitrat Ni(NO₃)₂, durch Sprühen oder Mischen beigegeben. Diese Mischung kann entweder einem Calzinierungsprozeß, d.h. Glühen bei einer Temperatur größer als 300°C, mit anschließender Reduktion oder direkt einer nassen Reduktion mit Wasserstoff bei einer Temperatur größer als 600°C unterzogen werden - gemäß dem sogenannten Sherrit-Gordon-Verfahren -.

Bei der trockenmechanischen Aufbereitung werden dem chemisch reinen Matrixwerkstoff des Metallpulvers in einem herkömmlichen Mischer die sinteraktivierenden Zusätze als metallisches Pulver zugegeben und homogenisiert. Zur Erhöhung der Sinteraktivität des Metallpulvers kommen auch Attritoren oder Kugelmühlen in Betracht, um ein mechanisches Legieren von Zusatz- und Matrixwerkstoff zu erreichen.

Die Zugabe der Dotierung mit niedriger Elektronenaustrittsarbeit in das Metallpulver kann ebenfalls durch das naßchemische - hydrometallurgische oder trockenmechanische Verfahren erfolgen.

Das Verfahren gemäß der Erfindung zeichnet sich durch seine vielfältigen Möglichkeiten des Verdichtens und der Formgebung aus, wobei zum Teil während des Verdichtens die endkonturnahe Formgebung der Elektrode erfolgt. Im einzelnen kann das Metallpulver mit seinen Dotierungen und Zusätzen durch
- mechanisch/hydraulisches Pressen;
- kaltisostatisches Pressen;
- Strangpressen;
- heißisostatisches Pressen; und/oder
- ein Metallpulverspritzgießverfahren
verdichtet und dadurch bedarfsweise auch in die endkonturnahe Form gebracht werden. Ziel ist es hierbei, eine homogene Mindestdichte, die sogenannte Gründichte, eine ausreichende Festigkeit, die sogenannte Grünfestigkeit, und die geforderte Geometrie zu erreichen.

Ist das Metallpulver mit den Dotierungen und Zusätzen in der eben dargelegten Weise verdichtet und in die endkonturnahe Form gebracht worden, wird dieses Zwischenprodukt gesintert. Nach dem Verdichten und vor dem Sintern des Metallpulvers mit den Dotierungen und den Zusätzen besteht aber auch die Möglichkeit, daß mittels spanender Formgebung die endkonturnahe Form der Elektrode hergestellt wird. Zur Erhöhung der Grünfestigkeit kann ein Vorsinterprozeß vor der Bearbeitung notwendig sein.

Weitere Vorteile und Merkmale ergeben sich aus der folgenden Beschreibung dreier Ausführungsformen der Erfindung im Zusammenhang mit der Zeichnung. Es zeigen:
- Fig. 1: einen Längsschnitt durch eine Hohlkathode gemäß einer ersten Ausführungsform der Erfindung; und
- Fig. 2: einen Längsschnitt durch eine Selenelektrode gemäß einer weiteren Ausführungsform der Erfindung.

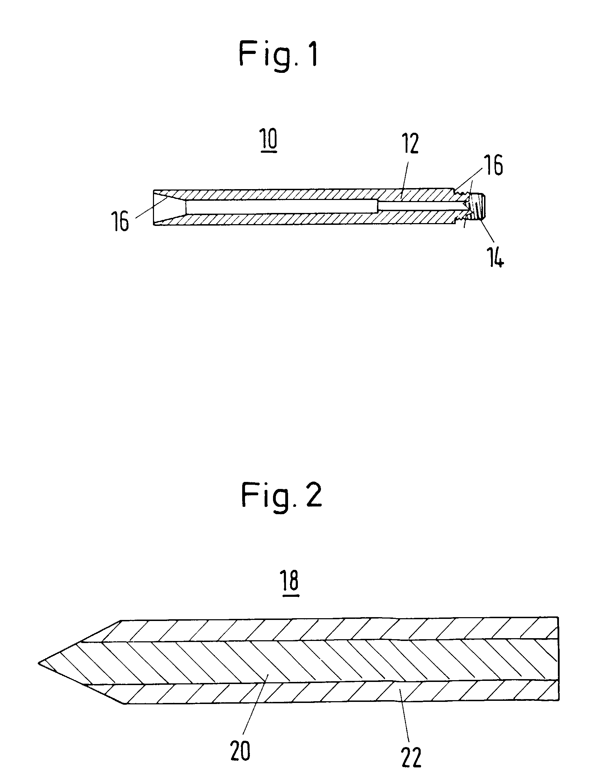

In Figur 1 ist im Längsschnitt eine als Hohlkathode 10 ausgebildete Elektrode dargestellt. Diese Hohlkathode 10 wird in einem bekannten Plasma-Beschichtungsverfahren eingesetzt.

Die Hohlkathode 10 besteht aus Metallpulver 12, das im wesentlichen aus 95,5 bis 98,9 Gew.-% chemisch reinem Wolfram, einer Dotierung mit niedriger Elektronenaustrittsarbeit, hier LaB₆, mit 1,8 bis 2,2 Gew-% sowie einem sinteraktivierenden Zusatz aus 0,12 bis 0,5 Gew-% Nickel besteht.

Das Metallpulver 12 wird über das naßchemische - hydrometallurgische Verfahren aufbereitet. Dabei wird eine flüssige Nickelnitratlösung in Wolframtrioxid eingesprüht und durchmischt.

Durch einen nachfolgenden Siebungsprozeß werden Partikel von größer als 10 µm abgetrennt. Die mittlere Korngröße des Wolframpulvers liegt hierbei zwischen 2 und 3,5 µm mit einer kumulierten Korngröße von 90% bei 5 Um.

In einem Mischer wird diesem Wolframpulver 1,8 bis 2,2 Gew-% Lanthanhexaborid in einer Partikelgröße von 1 bis 3 µm in trockener Form zugegeben und homogenisiert.

Das Metallpulver 12 mit den Dotierungen und den Zusätzen wird in elastische, zylindrische Schläuche gefüllt, wobei die beiden Verschlußstopfen mit einer zentrischen Sacklochbohrung versehen werden, um einen zylindrischen Stift aufzunehmen. Anschließend wird das Metallpulver 12 mit den Dotierungen und Zusätzen kaltisostatisch gepreßt. Nach der Entnahme des gepreßten Stabes und Entfernung des Stiftes liegt ein schlanker Grünling vor, beispielsweise mit einem Durchmesser-Längen-Verhältnis von 6 bis 12 und einem Bohrungsdurchmesser-LängenVerhältnis von 12 bis 20.

Alternativ dazu kann das Metallpulver 12 mit den Dotierungen und Zusätzen auch mechanischhydraulisch gepreßt werden. In die Preßmatrize wird dabei zunächst eine definierte Lage des Metallpulvers 12 mit den Dotierungen und Zusätzen eingefüllt. Nach dem Einlegen des Stiftes mit seitlicher Führung in der Preßmatrize wird eine weitere definierte Lage des Metallpulvers 12 mit den Dotierungen und den Zusätzen eingefüllt. Das Metallpulver 12 wird anschließend zweiseitig gepreßt. Nach der Entnahme des gepreßten Stabes und dem Entfernen des Stiftes liegt ein schlanker Grünling mit zentrischer oder wahlweise mit asymmetrischer Bohrung vor.

Die Grünlinge werden in einem Ofen bei Temperaturen von 1400° bis 1600°C und Haltezeiten bis zu 30 Min. indirekt gesintert. Hierbei werden Dichten von 80 bis 97% der theoretischen Dichte erreicht. Die Gewichtsanteile von sinteraktivierendem Zusatz und Dotierung mit niedriger Elektronenaustrittsarbeit liegen zwischen 80 bis 100% der ursprünglich in den Matrixwerkstoff des Metallpulvers 12 eingebrachten Menge.

Die Hohlkathode 10 wird nach einer spanenden Bearbeitung der Gewinde 14 und der Funktionsflächen 16 in einer Vakuum-Beschichtungsanlage eingesetzt.

Der Lichtbogen, der durch die Hohlkathode 10 erzeugt wird, bildet neben einem starken Elektronenstrahl ein Plasma mit hohem Ionisierungsgrad aus. Dieses Plasma wird als Verdampfungsquelle für verschiedene Werkstoffe, z.B. TiN, CrN, TiC, eingesetzt.

Die Betriebsparameter der Hohlkathode 10 in der Vakuum-Beschichtungsanlage sind:

| | |
|---|---|
| Spannung | 20 - 40 V |
| Strom | 50 - 300 A |
| Stromart | Gleichstrom |
| Gasart | Argon 4.8 |
| Druck der Anlage | 10⁻³ - 10⁻⁵ mbar |

Die Hohlkathode 10 wird durch eine äußere Wolframwendel beheizt und nach Erreichen einer definierten Temperatur gezündet. Bei einer Leistungsaufnahme von 3,5 bis 4 kW läßt sich der Lichtbogen durch die Hohlkathode 10 sicher zünden. Im Betrieb zeigt die Hohlkathode 10 ein gutes Standzeitverhalten über mehrere Stunden.

In Fig. 2 ist eine Selenelektrode 18 im Längsschnitt als weitere Ausführungsform der Erfindung dargestellt.

Die Selenelektrode 18 weist in zwei Verfahrensschritten hergestellte Bereiche auf, nämlich einen stiftartigen Elektrodenkern 20 und einen zylindrischen Elektrodenmantel 22, die jeweils aus unterschiedlichen Metallpulverzusammensetzungen bestehen.

Die Metallpulver mit den Dotierungen und Zusätzen sind aber beide in der eben dargelegten Art und Weise aufbereitet, wobei es sich bei dem Metallpulver des Elektrodenkerns 20 um chemisch reines Wolframpulver mit sinteraktivierenden Zusätzen und Dotierungen mit niedriger Elektronenaustrittsarbeit und bei dem Metallpulver des Elektrodenmantels 22 ebenfalls um Wolframpulver mit sinteraktivierenden Zusätzen, jedoch ohne Dotierungen mit niedriger Elektronenaustrittsarbeit handelt.

Zur Realisierung der Elektrodengeometrie können für die beiden Teile verschiedene Formgebungsverfahren eingesetzt werden.

Zuerst wird der Elektrodenkern 20 durch Strangpressen hergestellt und anschließend wird der Elektrodenmantel 22 durch mechanisch/hydraulisches Pressen an den Elektrodenkern 20 angepreßt.

Alternativ dazu kann beispielsweise auf den durch isostatisches Pressen hergestellten Elektrodenkern 20 der Selenelektrode 18 der Elektrodenmantel 22 durch Metallpulverspritzgießverfahren aufgespritzt werden.

Eine derartig hergestellte Elektrode hat den Vorteil, daß im Betrieb kein Auswandern des Lichtbogens erfolgt. Dieser Effekt zeigt sich bei herkömmlichen Elektroden, wenn eine Verringerung der Dotierung durch Verdampfen in der Elektrodenspitze auftritt. Weiterhin wird die Lichtbogenaufweitung durch Vergrößerung der Lichtbogenansatzfläche auf der Elektrodenspitze verringert. Aus schweißtechnischer Sicht führt eine Lichtbogenaufweitung beim zu verschweißenden Grundwerkstoff beispielsweise zu erhöhtem Einbrand, vergrößerter Wärmeeinflußzone oder geringer Aufschmelzleistung.

Eine weitere, nicht anhand einer Figur näher dargestellte Ausführungsform wird im folgenden beschrieben.

Es wird eine Elektrode für das WIG-Schweißen hergestellt. Das Metallpulver mit dem sinteraktivierenden Zusatz wird wie bei der eben beschriebenen Elektrode aufbereitet. Als Dotierung mit niedriger Elektronenaustrittsarbeit wird La₂O₃ verwendet.

Das derart aufbereitete Metallpulver mit den Dotierungen und den Zusätzen wird in elastische, zylindrische Schläuche gefüllt und bei 1800 bis 3000*10⁵ Pa isostatisch gepreßt. Die Gründichte erreicht Werte von 55 bis 75 % der theoretischen Dichte.

Das Sintern erfolgt in der anhand des ersten Ausführungsbeispiels dargelegten Weise.

In einer anwendungsorientierten Schweißuntersuchung wurde eine herkömmlich gefertigte, sogenannte WT20 Elektrode mit 1,8 bis 2,2 Gew-% ThO₂ mit dieser endkonturnah, erfindungsgemäß hergestellten, sogenannten WL20-Elektrode mit 1,8 bis 2,2 Gew-% La₂O₃, 0,5 Gew.-% Nickel verglichen.

Die Untersuchungsparameter waren im einzelnen:

| | |
|---|---|
| Elektrodendurchmesser | 2,4 mm |
| Elektrodenspitzenwinkel | 60° |
| Kegelstumpfdurchmesser | 0,2 mm |
| Elektrodenabstand | 2,5 mm |
| Schweißstrom | 200 A |
| Stromart | Gleichstrom |
| Polarität | Elektrode am Minuspol |
| Zündhilfsmittel | HF-Zündung |
| Brenner | HW20 mit Gaslinse |
| Gasdüsenabstand | 4,5 mm |
| Gasdüsendurchmesser | 11 mm |
| Schutzgasart | Argon 4.8 |
| Schutzgasdurchflußmenge | 8 l/Min. |
| Nahtart | Blindnaht |
| Grundwerkstoff | St 35-2 |
| Schweißgeschwindigkeit | 14 cm/Min. |
| Schweißfolge für die Zündversuche | Zündung des Lichtbogens, 1 Min. Schweißzeit 1 Min. Pause (Abkühlung) 60 Wiederholungen |
| Schweißfolge für Dauerschweißversuche | Zündung des Lichtbogens, 15 Min. Schweißzeit, 1 Min. Pause (Abkühlung), 4 Wiederholungen. |

Im Schweißeinsatz ergaben sich bei den obigen Parametern Stromdichten an der Elektrodensptze von 20 bis 30 kA/cm". Im Vergleich zur bekannten WT20-Elektrode zeigte sich sehr deutlich, daß die Elektrodentemperatur der WL20-Elektrode nach der Erfindung deutlich niedriger ist. Die WL20-Elektrode nach der Erfindung zeigte keine Kranzbildung, d.h. kein Aufwachsen von dendritischen Wolframkristalliten, oberhalb des Lichtbogenansatzes.

Die erfindungsgemäße WL20-Elektrode besitzt auch nach längerem Betrieb eine hohe geometrische Stabilität der Elektrodenspitze. Weiterhin wurden keine örtlichen Aufschmelzungen von Wolfram an der Elektrodenspitze festgestellt. Zudem zeigte diese Elektrode ein besseres schweißtechnisches Verhalten bei der Lichtbogenzündung.

Zusammenfassend zeichnet sich die Erfindung somit dadurch aus, daß Elektroden, vielseitig einsetzbar sind, beispielsweise in der Lichtbogenschweißtechnik mit nichtabschmelzender Elektrode, als Kathode in Leuchtmitteln mit Lichtbogenentladung, zur Erzeugung lichtbogengestützter Plasmen oder in Elektronenröhren und in Magnetfeldröhren. Der Elektrodenwerkstoff gewährleistet aufgrund der niedrigen Elektrodentemperatur eine hohe Formstabilität der Elektrodenspitze während des Betriebs. Ein Vorteil ist auch in der Realisierung komplexer Elektrodengeometrien zu sehen, wie dies beispielsweise bei Hohlkathoden, Selenelektroden oder Plasmakathoden erforderlich ist.

### Bezugszeichenliste

- 10: Hohlkathode
- 12: Metallpulver
- 14: Gewinde
- 16: Funktionsfläche
- 18: Selenelektrode
- 20: Elektrodenkern
- 22: Elektrodenmantel

## Patentansprüche

1. Verfahren zur Herstellung eines Formteils (10, 18), das aus einem hochschmelzenden Metallpulver (12, 20, 22) mit kristallinen sinteraktivierenden Zusätzen hergestellt ist, wobei das Metallpulver (12, 20, 22) aufbereitet, verdichtet und gesintert wird und vor dem Sintern im wesentlichen die Endkontur des Formteils (10, 18) geformt wird, **dadurch gekennzeichnet,** daß zur Herstellung einer Elektrode das Metallpulver (12, 20, 22) auch Dotierungen enthält und zumindest eine Dotierung aus einem Werkstoff mit niedriger Elektronenaustrittsarbeit besteht, wodurch die Emissionsstromdichte der Elektrode erhöht wird.

2. Verfahren nach Anspruch 1, **dadurch gekennzeichnet,** daß die Dotierung mit niedriger Elektronenaustrittsarbeit vor dem Pressen im Metallpulver (12, 20, 22) mit bis zu 5 Gew-% enthalten ist.

3. Verfahren nach Anspruch 1 oder 2, **dadurch gekennzeichnet,** daß ein oder mehrere Elemente oder Elementverbindungen mit energetisch instabiler Elektronenkonfiguration - also mit unvollständig besetzten d- bzw. f- Elektronenschalen - und Elektronendonatorenwirkung die Dotierung mit niedriger Elektronenaustrittsarbeit bildet.

4. Verfahren nach Anspruch 3, **dadurch gekennzeichnet,** daß Oxide und/oder Boride der Elemente der IIIb. bis IVb. Nebengruppe des Periodensystems der Elemente sowie den ersten drei Elementen aus der Lanthanoiden- und Actinoidengruppe die Dotierung mit niedriger Elektronenaustrittsarbeit bilden.

5. Verfahren nach Anspruch 3 und 4, **dadurch gekennzeichnet,** daß Y₂O₃, ZrO₂, La₂O₃, CeO₂und/oder LaB₆ die Dotierung mit niedriger Elektronenaustrittsarbeit bilden.

6. Verfahren nach einem der vorangehenden Ansprüche, **dadurch gekennzeichnet,** daß vor dem Pressen im Metallpulver (12, 20, 22) der sinteraktivierende Zusatz bis zu 1,0 Gew.-% enthalten ist.

7. Verfahren nach einem der vorangehenden Ansprüche, **dadurch gekennzeichnet,** daß ein oder mehrere Elemente der VIII. Nebengruppe des Periodensystems der Elemente den sinteraktivierenden Zusatz bilden.

8. Verfahren nach Anspruch 7, **dadurch gekennzeichnet**, daß Nickel, Palladium und/oder Platin den sinteraktivierenden Zusatz bilden.

9. Verfahren nach einem der vorangehenden Ansprüche, **dadurch gekennzeichnet,** daß Wolfram und/oder Molybdän im wesentlichen das Metallpulver (12, 20, 22) bilden.

10. Verfahren nach einem der vorangehenden Ansprüche, **dadurch gekennzeichnet,** daß das Metallpulver (12, 20, 22) naßchemisch - hydrometallurgisch aufbereitet wird.

11. Verfahren nach einem der vorangehenden Ansprüche, **dadurch gekennzeichnet**, daß das Metallpulver (12, 20, 22) trocken mechanisch aufbereitet wird.

12. Verfahren nach einem der vorangehenden Ansprüche, **dadurch gekennzeichnet,** daß das Metallpulver (12, 20, 22) durch mechanisch/hydraulisches Pressen verdichtet wird.

13. Verfahren nach einem der vorangehenden Ansprüche, **dadurch gekennzeichnet**, daß das Metallpulver (12, 20, 22) durch kaltisostatisches Pressen verdichtet wird.

14. Verfahren nach einem der vorangehenden Ansprüche, **dadurch gekennzeichnet**, daß das Metallpulver (12, 20, 22) durch Strangpressen verdichtet wird.

15. Verfahren nach einem der vorangehenden Ansprüche, **dadurch gekennzeichnet,** daß nach dem Verdichten des Metallpulvers (12, 20, 22) dieses nach Bedarf vorgesintert und durch anschließende spanende Formgebung in die endkonturnahe Form gebracht wird.

16. Verfahren nach einem der vorangehenden Ansprüche, **dadurch gekennzeichnet,** daß das Metallpulver (12, 20, 22) durch heißisostatisches Pressen verdichtet wird.

17. Verfahren nach einem der vorangehenden Ansprüche, **dadurch gekennzeichnet,** daß das Metallpulver (12, 20, 22) durch ein Metallpulverspritzgießverfahren verdichtet wird.

## Claims

1. A process for the production of a shaped member (10, 18) which is produced from a high-melting metal powder (12, 20, 22) with crystalline sinter-activating additives, wherein the metal powder (12, 20, 22) is prepared, compacted and sintered and prior to the sintering operation substantially the final contour of the shaped member (10, 18) is shaped, characterised in that for the production of an electrode the metal powder (12, 20, 22) also includes dopants and at least one dopant comprises a material with a low electron work function whereby the emission current density of the electrode is increased.

2. A process according to claim 1 characterised in that the dopant with a low electron work function is contained prior to the pressing operation in the metal powder (12, 20, 22) with up to 5% by weight.

3. A process according to claim 1 or claim 2 characterised in that one or more elements or element compounds with an energy-unstable electron configuration - that is to say with incompletely filled d- or f-electron shells - and an electron donor action forms the dopant with low electron work function.

4. A process according to claim 3 characterised in that oxides and/or borides of the elements of sub-groups IIIb to IVb of the periodic system of elements and the first three elements from the lanthanide and actinide group form the dopant with a low electron work function.

5. A process according to claim 3 and claim 4 characterised in that Y₂O₃, ZrO₂, La₂O₃, CeO₂ and/or LaB₆ form the dopant with a low electron work function.

6. A process according to one of the preceding claims characterised in that prior to the pressing operation the sinter-activating additive is contained in the metal powder (12, 20, 22) at up to 1.0% by weight.

7. A process according to one of the preceding claims characterised in that one or more elements of sub-group VIII of the periodic system of elements form the sinter-activating additive.

8. A process according to claim 7 characterised in that nickel, palladium and/or platinum form the sinter-activating additive.

9. A process according to one of the preceding claims characterised in that tungsten and/or molybdenum substantially form the metal powder (12, 20, 22).

10. A process according to one of the preceding claims characterised in that the metal powder (12, 20, 22) is prepared in a wet chemical-hydrometallurgical procedure.

11. A process according to one of the preceding claims characterised in that the metal powder (12, 20, 22) is prepared in a dry mechanical procedure.

12. A process according to one of the preceding claims characterised in that the metal powder (12, 20, 22) is compacted by mechanical/hydraulic pressing.

13. A process according to one of the preceding claims characterised in that the metal powder (12, 20, 22) is compacted by cold-isostatic pressing.

14. A process according to one of the preceding claims characterised in that the metal powder (12, 20, 22) is compacted by extrusion.

15. A process according to one of the preceding claims characterised in that after the step of compacting the metal powder (12, 20, 22) it is pre-sintered if necessary and put into a shape close to the final contour by subsequent cutting shaping.

16. A process according to one of the preceding claims characterised in that the metal powder (12, 20, 22) is compacted by hot-isostatic pressing.

17. A process according to one of the preceding claims characterised in that the metal powder (12, 20, 22) is compacted by a metal powder injection moulding process.

## Revendications

1. Procédé pour la fabrication d'un corps moulé (10, 18) qui est fabriqué à partir d'une poudre de métal réfractaire (12, 20, 22) avec des additifs cristallins actifs au frittage, la poudre de métal (12, 20, 22) étant préparée, densifiée et frittée et avant le frittage les contours définitifs du corps moulé (10, 18) étant sensiblement formés, caractérisé en ce que pour la fabrication d'une électrode, la poudre de métal (12, 20, 22) comprend également des dopages et en ce qu'au moins un dopage se compose d'un matériau avec un faible travail de sortie d'électrons, ce qui augmente la densité d'émission de l'électrode.

2. Procédé selon la revendication 1, caractérisé en ce que le dopage avec le faible travail de sortie d'électrons est contenu avant le pressage dans la poudre de métal (12, 20, 22) avec une teneur de 5 % en poids.

3. Procédé selon la revendication 1 ou 2, caractérisé en ce qu'un ou plusieurs éléments ou liaisons d'élément avec une configuration d'électrons énergiquement instable - donc avec des couches d'électrons d ou f incomplètement garnies - et une action de dopage d'électron forme le dopage avec un faible travail de sortie d'électrons.

4. Procédé selon la revendication 3, caractérisé en ce que les oxydes et/ou les borures des éléments du sous-groupe IIIb. à IVb. de la classification périodique des éléments ainsi que les trois premiers éléments des groupes de lanthanide et d'actinides forment le dopage avec le faible travail de sortie d'électrons.

5. Procédé selon la revendication 3 et 4, caractérisé en ce que Y₂O₃, ZrO₂, La₂O₃, CeO₂ et/ou LaB₆ forment le dopage avec le faible travail de sortie d'électrons.

6. Procédé selon l'une des revendications précédentes, caractérisé en ce qu'avant le pressage, l'additif activateur de frittage est contenu dans la poudre de métal (12, 20, 22) jusqu'à 10 pour cent en poids.

7. Procédé selon l'une des revendications précédentes, caractérisé en ce qu'un ou plusieurs éléments du sous-groupe VIII de la classification périodique des éléments forment l'additif activateur de frittage.

8. Procédé selon la revendication 7, caractérisé en ce que le nickel, le palladium et/ou le platine forment l'additif activateur de frittage.

9. Procédé selon l'une des revendications précédentes, caractérisé en ce que le tungstène et/ou le molybdène forment essentiellement la poudre de métal (12, 20, 22).

10. Procédé selon l'une des revendications précédentes, caractérisé en ce que la poudre de métal (12, 20, 22) est préparée par voie chimique humide ou hydrométallurgique.

11. Procédé selon l'une des revendications précédentes, caractérisé en ce que la poudre de métal (12, 20, 22) est préparée mécaniquement à sec.

12. Procédé selon l'une des revendications précédentes, caractérisé en ce que la poudre de métal (12, 20, 22) est densifiée par pressage mécanique et hydraulique.

13. Procédé selon l'une des revendications précédentes, caractérisé en ce que la poudre de métal (12, 20, 22) est densifiée par pressage isostatique à froid.

14. Procédé selon l'une des revendications précédentes, caractérisé en ce que la poudre de métal (12, 20, 22) est densifiée par boudinage.

15. Procédé selon l'une des revendications précédentes, caractérisé en ce qu'après la densification de la poudre de métal (12, 20, 22), celle-ci est pré-frittée au besoin et est amenée dans sa forme au contour définitif par façonnage ultérieur par enlèvement de copeaux.

16. Procédé selon l'une des revendications précédentes, caractérisé en ce que la poudre de métal (12, 20, 22) est condensée par pressage isostatique à chaud

17. Procédé selon l'une des revendications précédentes, caractérisé en ce que la poudre de métal (12, 20, 22) est densifiée par un procédé de coulée par injection de poudre de métal.
